Europäisches Patentamt

European Patent Office

Office européen des brevets

(19)

(11) **EP 0 774 059 B1**

(12) **FASCICULE DE BREVET EUROPEEN**

| | |
|---|---|
| (45) Date de publication et mention de la délivrance du brevet:<br>**23.09.1998 Bulletin 1998/39** | (51) Int Cl.6: **F02D 7/02**, F02M 69/08,<br>F02D 41/12 |
| (21) Numéro de dépôt: 95929019.8 | (86) Numéro de dépôt international:<br>**PCT/EP95/02989** |
| (22) Date de dépôt: **27.07.1995** | (87) Numéro de publication internationale:<br>**WO 96/04473 (15.02.1996 Gazette 1996/08)** |

(54) **PROCEDE DE CONTROLE DU BON FONCTIONNEMENT DE L'ASSISTANCE EN AIR D'UN INJECTEUR DE CARBURANT POUR MOTEUR A COMBUSTION INTERNE ET DISPOSITIF CORRESPONDANT**

VERFAHREN ZUR GUTEN BETRIEBSSTEUERUNG DER LUFTUNTERSTÜZUNG EINES KRAFTSTOFFEINSPRITZVENTILS VON BRENNKRAFTMASCHINEN UND DIE ENTSPRECHENDE VORRICHTUNG

METHOD FOR CONTROLLING THE GOOD OPERATION OF THE AIR ASSISTANCE TO A FUEL INJECTOR OF AN INTERNAL COMBUSTION ENGINE, AND CORRESPONDING DEVICE

| | |
|---|---|
| (84) Etats contractants désignés:<br>**DE ES GB IT** | (74) Mandataire: **Epping, Wilhelm, Dr.-Ing.<br>Patentanwalt<br>Postfach 22 13 17<br>80503 München (DE)** |
| (30) Priorité: **01.08.1994 FR 9409613** | |
| (43) Date de publication de la demande:<br>**21.05.1997 Bulletin 1997/21** | (56) Documents cités:<br>**EP-A- 0 529 642**   **US-A- 5 289 808** |
| (73) Titulaire: **SIEMENS AUTOMOTIVE S.A.<br>31036 Toulouse Cédex (FR)** | • **PATENT ABSTRACTS OF JAPAN vol. 18 no. 34 (M-1544) ,19 Janvier 1994 & JP,A,05 263734 (NISSAN MOTOR CO. LTD.) 12 Octobre 1993,** |
| (72) Inventeur: **ATANASYAN, Alain<br>F-31170 Tournefeuille (FR)** | |

## Description

La présente invention concerne un procédé de contrôle du bon fonctionnement de l'assistance en air d'un injecteur de carburant.

Dans un moteur à combustion interne il est important que le mélange air/carburant soit le plus homogène possible pour garantir une bonne combustion et un bon rendement du moteur (voir EP-A-529 642).

Il est bien connu pour améliorer l'homogénéité du mélange air/carburant d'insuffler de l'air au niveau du nez de l'injecteur. Cette assistance en air crée une zone de turbulence qui permet de casser les gouttelettes de carburant injecté. Ainsi les gouttelettes de carburant sont de tailles plus réduites et sont plus nombreuses pour une quantité de carburant donnée. La surface de contact entre l'air et les gouttelettes est notablement accrue. Il résulte de cette assistance en air, une meilleure combustion du mélange, une pollution moindre, un temps d'amorçage du catalyseur réduit, un couple moteur maintenu à un niveau optimal même lorsque la richesse du mélange est inférieure à 1 (pendant la phase de mise en action du moteur) (voir US-A-5 289 808).

De ce fait l'assistance en air est de plus en plus utilisée dans la stratégie de pilotage d'un moteur à combustion interne. Cette assistance en air se limite très souvent à la phase de mise en action du moteur et n'est pas poursuivie lorsque le moteur est chaud, car elle entraîne dans ce cas un débit d'air additionnel qui peut perturber le moteur (par exemple lors de retour en mode de ralenti moteur).

Les nouvelles normes (américaines notamment) en matière de contrôle de l'émission des polluants par les véhicules automobiles imposent non seulement que les conditions de combustion du mélange air/carburant soient optimales, mais encore que l'on vérifie en permanence le bon fonctionnement des dispositifs permettant cette combustion optimale. De ce fait il convient de s'assurer que le dispositif d'assistance en air à l'injection fonctionne de manière correcte.

Le but de la présente invention est de concevoir un procédé et un dispositif de contrôle du bon fonctionnement de l'assistance en air. On cherche d'autre part à ne pas ajouter de capteurs supplémentaires de manière à ne pas augmenter le coût et à ne pas compliquer la réalisation du calculateur électronique associé au moteur.

A cet effet la présente invention concerne un procédé de contrôle du bon fonctionnement d'un injecteur assisté par air pendant la phase de mise en action d'un moteur à combustion interne. Cet injecteur est adapté pour délivrer une quantité de carburant déterminée au moteur. Le procédé selon l'invention se caractérise en ce qu'il consiste à:

♦ Vérifier, a posteriori pendant une phase de ralenti stabilisée, qu'une quantité d'air déterminée peut être injectée pendant la phase d'assistance en air.

Ainsi on vérifie le bon fonctionnement du dispositif d'alimentation en air en vérifiant qu'une certaine quantité d'air peut être introduite. Cette vérification a lieu en dehors de la phase d'assistance en air, pendant une phase de ralenti stabilisée. De ce fait il n'est pas nécessaire d'utiliser des capteurs supplémentaires, puisque avantageusement on emploie les capteurs déjà utilisés pour la régulation de ralenti.

De manière préférentielle, pour compléter la vérification du bon fonctionnement de l'assistance en air on vérifie en outre que le moteur est alimenté avec un mélange air/carburant pauvre, pendant la phase d'assistance en air. A cet effet on utilise une sonde de mesure de la richesse (déjà présente dans tout moteur à commande électronique) pour vérifier que durant toute la phase d'assistance en air le mélange brûlé est pauvre. Bien entendu, lorsque cette sonde détecte un mélange riche un code de panne du système d'assistance en air est émis de manière à en informer le conducteur.

D'autres objets caractéristiques et avantages de la présente invention sont décrits, à titre d'exemples non limitatifs, dans la description qui suit en référence aux dessins annexés dans lesquels:

- la figure 1 est une vue schématique d'un moteur à combustion interne muni d'un système d'assistance en air, dans lequel un capteur de pression est placé après un papillon d'admission,
- la figure 2 est une vue schématique analogue à la figure 1, dans laquelle un débitmètre d'air d'admission est placé immédiatement en aval d'un filtre à air et,
- la figure 3 représente un graphe de l'efficacité du catalyseur en fonction de la température des gaz d'échappement.

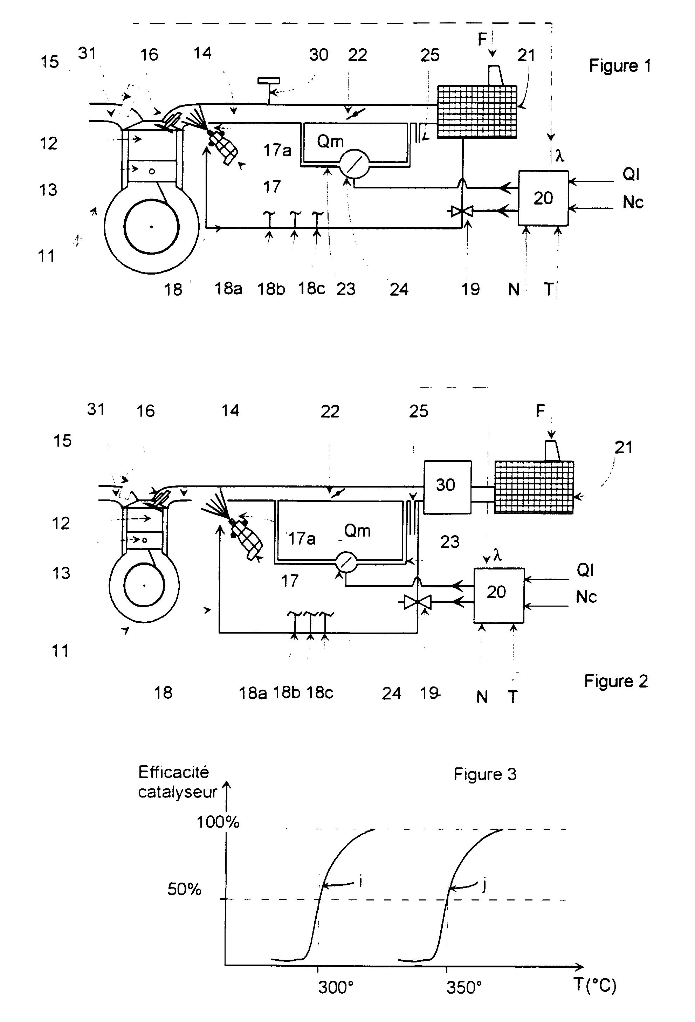

Selon la forme de réalisation représentée à la figure 1, un moteur 11 comporte un cylindre 12, dans lequel est monté à coulissement un piston 13. De manière classique le cylindre 12 est relié d'une part à une tubulure d'admission 14 et d'autre part à une tubulure d'échappement 15.

A proximité immédiate d'une soupape d'admission 16 et dans la tubulure d'admission 14 on trouve un injecteur de carburant 17 de type connu. Cet injecteur est alimenté en air, par une conduite 18 commandée par une vanne 19 d'assistance en air, de type tout ou rien. De manière connue le pilotage de cette vanne 19 est réalisé par un calculateur 20. L'air admis dans cette conduite d'assistance en air 18 est de l'air ambiant (flèche F, figure 1) filtré de manière classique par un filtre à air 21.

L'air ambiant après filtration par le filtre 21 est également admis dans la tubulure d'admission 14. De manière connue, l'air admis dans la tubulure 14 est régulé par un papillon 22 avant d'arriver au niveau du nez 17a de l'injecteur.

Un circuit de régulation de ralenti établit une dérivation 23, court circuitant le papillon 22. Une vanne de régulation de ralenti 24 est montée dans cette dérivation 23 de manière à réguler le débit d'air circulant dans la dérivation.

De manière connue, un moyen de mesure 30 de la pression d'admission est prévu en aval du papillon 22. Un tel moyen permet de quantifier la quantité d'air entrant dans la tubulure d'admission.

Une seconde conduite 25 dite de récupération des vapeurs d'huile est également schématisée à la figure 1.

On notera que la vanne d'assistance en air 19 commande également les injecteurs des autres cylindres du moteur. A cet effet des conduites d'assistance en air 18a, 18b, 18c partent également vers ces injecteurs (non représentés). On a supposé que le moteur à combustion interne équipé du système d'assistance en air à l'injection comportait quatre cylindres. Bien évidemment, ce moteur peut comporter plus ou moins de cylindres sans que cela sorte du cadre de la présente invention.

De manière connue, lorsque le moteur est en phase de mise en action (c'est à dire lorsque le moteur est froid) le système d'assistance en air insuffle de l'air au niveau du nez 17a de l'injecteur. Pour ce faire la vanne d'assistance en air 19 est commandée par le calculateur 20 de manière à être à pleine ouverture. Dés que le moteur est chaud, le calculateur (renseigné par ailleurs, de manière connue, sur la température T du moteur) envoi un ordre de fermeture à la vanne d'assistance en air 19.

Le procédé selon l'invention permet de vérifier que le système d'assistance en air (comportant la vanne d'assistance 19 et la conduite 18) fonctionne correctement, et qu'une quantité d'air déterminée peut être insufflée au niveau du nez de l'injecteur.

A cet effet, lorsque le moteur est en dehors de la phase d'assistance en air (phase de mise en action), le procédé selon la présente invention consiste à

- s'assurer que le moteur est dans une phase de ralenti stabilisée. Pour ce faire on vérifie que le régime N du moteur est inférieur à un régime seuil Nc depuis un temps prédéterminé, et que la température T du moteur est supérieure à une température dite de mise en action. Cette température de mise en action est la température théorique atteinte par le moteur et à laquelle on peut considérer que celui-ci n'est plus en phase de mise en action.
- ouvrir la vanne d'assistance en air 19.
- mesurer la quantité d'air Qm passant par la vanne de régulation de ralenti 24 pendant un temps t1 prédéterminé,
- comparer cette quantité d'air Qm à une quantité d'air limite préétablie et,
- en déduire si le système d'assistance fonctionne correctement.

L'explication détaillée du procédé ci-dessus énoncé est indiquée ci-après.

Pour vérifier si le système d'assistance en air fonctionne correctement, il faudrait pouvoir mesurer la quantité d'air passant par la vanne 19 et la conduite 18 et la comparer avec une quantité d'air théorique correspondant à une alimentation sans fuites, ni obstructions, du système d'assistance en air. A cet effet des moyens de mesure de la quantité d'air traversant le système d'assistance en air seraient nécessaires. Or l'un des objectifs de la présente invention est de ne pas rajouter de moyens de mesure par rapport à ceux qui existent déjà.

Avantageusement selon l'invention on se sert des moyens de mesure et de contrôle de la régulation de ralenti (déjà présents sur tout moteur à commande électronique) pour mesurer, de manière indirecte, la quantité d'air passant dans le système d'assistance en air.

En effet lorsqu'un moteur suit un régime de ralenti stabilisé, le papillon d'admission d'air 22 est fermé et la vanne de régulation du ralenti 24 régule alors la totalité du débit d'air arrivant dans la conduite d'admission 14.

En régime de ralenti stabilisé la vanne de régulation de ralenti 24 est pilotée par le calculateur 20. Ce calculateur influe sur l'ouverture ou la fermeture de la vanne de régulation 24 en calculant en permanence son Rapport Cyclique d'Ouverture RCO. De manière classique ce rapport cyclique d'ouverture, est une fonction de la différence entre le régime réel N du moteur et le régime Nc de consigne du ralenti. Ce rapport RCO comporte un terme proportionnel, un terme intégral et un terme dérivé. Le régime réel du moteur N est mesuré en permanence par un capteur approprié, qui transmet cette information de manière usuelle au calculateur 20. Le régime Nc de consigne du ralenti a été établi sur un banc d'essai lors de la mise au point du moteur.

Le terme intégral du Rapport Cyclique d'Ouverture (RCO) est égal à

$$\int_{t=t0}^{t1} (Nc - N)dt.$$

Or ce terme est représentatif de la quantité d'air passant à travers la vanne de régulation de ralenti pendant un temps déterminé (t1).

En relevant la valeur de ce terme au bout d'un temps t1 on connaît donc la quantité d'air ayant traversé la vanne de régulation de ralenti, pendant ce temps t1.

Sachant ce fait on va mesurer la quantité d'air traversant cette vanne de régulation de ralenti pour en déduire la quantité d'air traversant la vanne d'assistance en air.

Ainsi lors de la mise au point du moteur on note la valeur de l'intégrale au bout d'un temps t1, lorsque l'on se trouve en régime de ralenti stabilisé (vanne 19 d'assistance en air fermée). La valeur de cette intégrale est mémorisée dans la mémoire du calculateur 20 sous le nom de quantité d'air de ralenti Qr. On notera que dans ce cas, tout l'air admis vers le cylindre 12 passe par la vanne de régulation du ralenti. En effectuant la mesure du terme intégral du RCO lorsque la vanne d'assistance en air est fermée on connaît donc la quantité d'air maximale admissible par le cylindre 12 pour fonctionner au ralenti.

Dans un deuxième temps et toujours lorsque le moteur est sur banc d'essai et que l'on se trouve en régime de ralenti stabilisé, on ouvre alors, la vanne 19 d'assistance en air pendant le même temps t1. Dans ce cas l'air se dirigeant vers le cylindre 12 passe par la dérivation 23 de ralenti, mais aussi par la conduite d'assistance en air 18. La quantité d'air totale devant passer par l'ensemble des conduites 18 et 23 est la quantité d'air Qr (déjà mesurée), qui alimente le moteur en régime de ralenti.

On mesure et on mémorise la quantité Ql, dite quantité limite d'air, traversant la vanne de régulation de ralenti lorsque la vanne d'assistance 19 est ouverte pendant le temps t1. Cette quantité est mesurée comme précédemment en relevant la valeur du terme intégral du RCO après le temps t1.

On sait que la quantité d'air Qa ayant traversé la conduite 18 d'assistance en air est donnée par la formule suivante:

$$Qa = Qr - Ql.$$

Ainsi sans mesurer directement la quantité d'air ayant traversé la vanne d'assistance en air 19 on a réussi à déterminer cette quantité.

Bien sûr pour pouvoir faire le diagnostic du bon fonctionnement du système d'assistance en air il ne suffit pas de mesurer la quantité d'air traversant la vanne d'assistance en air, mais il faut encore comparer cette quantité d'air à une valeur de référence Pour l'instant l'ensemble des mesures effectuées (Qr, Ql) l'ont été sur banc d'essai, alors que l'on était sûr que le système d'assistance en air fonctionnait correctement. De ce fait la valeur Ql mesurée est la valeur de référence représentant la quantité d'air traversant la vanne de régulation de ralenti lorsque le système d'assistance en air fonctionne correctement.

Lorsque le moteur est en fonctionnement normal (mise en place sur un véhicule et non plus sur un banc d'essai) et que l'on se trouve en régime de ralenti stabilisé, on ouvre la vanne d'assistance en air 19. Simultanément on retranche du terme intégral RCO une valeur correspondant à la quantité d'air Qa passant par la vanne d'assistance en air. Cette quantité d'air est connue et a été déterminée lorsque le moteur se trouvait sur banc d'essai. On relève ensuite au bout du temps t1 la valeur Qm (quantité d'air mesurée comme passant à travers la conduite de régulation de ralenti). On compare cette valeur Qm mesurée avec le terme intégral du RCO. Comme on a déjà retranché la valeur Qa de ce terme intégral, la valeur de l'intégrale est directement égale à Qr - Qa.

Or Or - Qa = Ql (Ql a déjà été déterminée sur banc d'essai et est la valeur limite de référence) Si Qm est supérieur ou égal à Ql on en déduit que le système d'assistance en air fonctionne (c'est à dire qu'il ne comporte ni fuites, ni obturations). Dans le cas contraire un code de non-fonctionnement du système d'assistance en air est émis vers le calculateur qui en informe le conducteur par tout moyen approprié.

Ainsi en effectuant une mesure de la quantité d'air Qm passant à travers la conduite de régulation de ralenti durant le temps t1, lorsque le moteur est en régime de ralenti stabilisé, on peut déterminer si le système d'assistance en air fonctionne correctement ou pas.

L'acquisition de la valeur Ql (quantité limite d'air passant par la conduite de régulation de ralenti lorsque le moteur suit un régime de ralenti stabilisé et que la vanne d'assistance en air est ouverte) peut également être effectuée avant chaque mesure de la quantité d'air Qm (vanne d'assistance en air ouverte). Dans ce cas l'acquisition de la valeur Ql est effectuée pendant le fonctionnement normal du moteur, c'est à dire pas uniquement lors de la mise au point sur banc d'essai. Ainsi si l'usure des éléments mécaniques de la voiture fait varier la quantité d'air limite Ql, il en est tenu compte pour le diagnostique du bon fonctionnement du système d'assistance en air. On a alors un procédé d'apprentissage de la valeur limite Ql.

Le procédé ci-dessus indiqué peut également être mis en oeuvre dans le cas où le moyen de mesure 30 d'air d'admission est placé immédiatement après le filtre 21. Ce cas est représenté à la figure 2.

On notera que la mesure de Qm (c'est à dire le diagnostique du bon fonctionnement de l'assistance en air) est arrêtée si.

-      le moteur ne suit plus un mode de régulation de ralenti, et
-      si une charge pouvant perturber la régulation de ralenti est appliquée (par exemple mise en route de climatisation ...etc.)

De manière préférentielle (que ce soit dans le cadre du mode de réalisation représenté à la figure 1 ou à la figure 2), on complète la vérification de l'absence de fuites ou d'obturations de la conduite 18 et de la vanne 19, par une vérification que pendant la phase de mise en action le moteur brûle un mélange dit pauvre. En effet on diminue le taux de pollution du moteur à sa mise en action si l'on travaille en mélange pauvre, ceci tout simplement parce que le catalyseur se met en action plus rapidement. La figure 3 représente la courbe d'efficacité du catalyseur en fonction de sa température. La courbe j représente l'efficacité du catalyseur lorsque le mélange brûlé est "riche" et la courbe i représente l'efficacité du catalyseur lorsque le mélange air/carburant brûlé est "pauvre".

Il ressort de ces deux courbes un avantage à fonctionner en mélange pauvre lors de la phase de mise en action du moteur, afin d'activer plus rapidement l'efficacité du catalyseur. On notera que l'on atteint 50% d'efficacité du catalyseur 50°C avant lorsque l'on brûle un mélange pauvre. Ainsi 50°C de gain représente environ 30% de gain en temps d'amorçage du catalyseur.

Il en résulte qu'un moyen direct de vérification que le système d'assistance en air fonctionne bien et atteint son objectif de diminution des polluants émis, est de s'assurer que le mélange à brûler est pauvre.

A cet effet pendant la phase de mise en action et dés qu'une sonde de mesure de la quantité d'oxygène 31 est active, on mesure la richesse $\lambda$ du mélange. Cette sonde existe sur tout véhicule à commande électronique et n'a pas besoin d'être ajoutée spécifiquement pour cette mesure. Pour que le mélange soit dit pauvre il faut que la richesse $\lambda$ mesurée par la sonde 31 soit inférieure à 1.

Dés que cette sonde est active et pendant toute la durée restante de la phase d'assistance en air à l'injection, on mesure par échantillonnage la richesse $\lambda$ du mélange. On effectue ensuite le rapport du nombre de fois où la richesse a été trouvée inférieure à 1, sur le nombre de fois où la richesse a été mesurée. Si ce rapport est supérieur à une valeur prédéterminée on en déduit que le moteur a bien fonctionné en mélange pauvre, et donc que le système d'assistance en air a bien fonctionné et a atteint son objectif de réduction des polluants émis. Par exemple si le moteur a fonctionné pendant plus de 70% du temps en mélange pauvre (lors de la phase de démarrage) on considère que le système d'assistance en air fonctionne correctement.

On notera en effet que le moteur ne peut pas fonctionner totalement (à 100%) en mélange pauvre lors de la phase d'assistance en air. En effet pendant cette phase de mise en action le conducteur, à moins d'être à l'arrêt et au ralenti, va solliciter son moteur et donc provoquer des enrichissements en carburant du mélange à brûler.

Il est à noter que la vérification de la richesse $\lambda$ du mélange peut être effectuée de manière complémentaire à la vérification de l'absence de fuites et/ou d'obturations dans le système d'assistance en air. Ces deux vérifications peuvent être réalisées indépendamment l'une de l'autre.

Le bon fonctionnement du système d'assistance en air garantit une bonne atomisation du jet de carburant injecté et par conséquent une meilleure combustion et une pollution moindre.

Le fait de travailler en mélange pauvre pendant la phase de mise en action du moteur garanti une diminution des émanations de polluants, puisque le catalyseur fonctionne plus rapidement. On diminue ainsi le temps d'amorçage du catalyseur.

Bien entendu la présente invention n'est pas limitée aux modes de réalisations décrits, mais englobe toute variante à la portée de l'homme de l'art. Notamment, la mesure de la quantité d'air passant dans la conduite de régulation de ralenti peut être réalisée par tous moyens appropriés et non uniquement par la surveillance du terme intégral du rapport cyclique d'ouverture de la vanne de régulation de ralenti.

## Revendications

1. Procédé de contrôle du bon fonctionnement d'un injecteur (17) assisté par air pendant la phase de mise en action d'un moteur à combustion interne (11), le dit injecteur étant adapté pour délivrer une quantité de carburant déterminée au moteur, le dit procédé étant caractérisé en ce qu'il consiste à:

   ● vérifier a posteriori, pendant une phase de ralenti stabilisée, qu'une quantité d'air déterminée peut être injectée pendant la phase d'assistance en air.

2. Procédé de contrôle selon la revendication 1, caractérisé en ce qu'il consiste en outre à:

   ● vérifier que le moteur à combustion interne est alimenté avec un mélange air / carburant dit pauvre, pendant la phase d'assistance en air.

3. Procédé selon la revendication 1 ou 2, caractérisé en ce qu'il consiste à:

   ● s'assurer que le moteur suit un régime de ralenti depuis un temps déterminé et que le dit moteur est à une température (T) supérieure à une température dite de mise en action,
   ● ouvrir la vanne d'assistance en air (19),
   ● Mesurer la quantité d'air (Qm) passant par une vanne de ralenti (24) pendant un temps prédéterminé,
   ● comparer cette quantité d'air (Qm) à une quantité d'air limite (Ql) et,
   ● en déduire si le système d'assistance en air fonctionne ou non.

4. Procédé selon la revendication 3, caractérisé en ce que dans le cas où la quantité d'air mesurée Qm, est inférieure à la quantité d'air limite Ql, on envoie vers un calculateur (20) de commande du moteur un code de panne du système d'assistance en air (18, 19).

5. Procédé selon l'une des revendications 1 à 4, caractérisé en ce que la mesure de la quantité d'air (Qm) traversant la vanne de régulation de ralenti (24) est déterminée par la prise en compte d'un terme intégral apparaissant dans le calcul d'un rapport cyclique d'ouverture (RCO) de la vanne de régulation de ralenti (24).

6. Procédé selon la revendication 2, caractérisé en ce que la vérification du fait que le moteur est alimenté en mélange pauvre est effectuée pendant la phase d'assistance en air de l'injecteur.

7. Procédé selon la revendication 6. caractérisé en ce que pendant la phase d'assistance en air et dés qu'une sonde (31) de mesure de la quantité d'oxygène est opérationnelle:

- on détermine si la richesse du mélange injectée est inférieure ou supérieure à 1,
- on détermine le nombre de fois où la richesse à été inférieure à 1 et le nombre de fois où cette richesse a été supérieure à 1, en effectuant un échantillonnage de mesures pendant la phase d'assistance en air,
- on forme le rapport correspondant au nombre de fois où la richesse a été inférieure à 1, sur le nombre de mesures effectuées pendant la phase d'assistance en air et,
- si ce rapport est supérieur à un rapport minimum on en déduit que le moteur a été alimenté en mélange pauvre pendant la phase d'assistance en air.

8. Procédé selon la revendication 7, caractérisé en ce que lorsque le rapport est inférieur au rapport minimum, un code de panne du système d'assistance en air est émis vers le calculateur.

9. Dispositif de contrôle mettant en oeuvre le procédé selon les revendications 1 à 8, caractérisé en ce qu'il présente:

- des moyens de vérification (20) qu'une quantité d'air déterminée peut être injectée pendant la phase d'assistance en air, les dits moyens comportant

  - des moyens d'ouverture d'une vanne d'assistance en air (19),
  - des moyens adaptés pour s'assurer que le moteur (11) suit un régime de ralenti stable depuis un temps prédéterminé,
  - des moyens pour mesurer la quantité d'air (Qm) traversant la vanne de régulation de ralenti (24) et,
  - des moyens de comparaison adaptés pour comparer la quantité d'air mesurée Qm à une quantité d'air limite Ql et,

- des moyens de vérification (31) de la richesse λ du mélange air / carburant pendant la phase d'assistance en air.

Patentansprüche

1. Verfahren zum Steuern der einwandfreien Funktionsweise eines Einspritzventils (17), das während der Startphase einer Brennkraftmaschine (11) durch Hilfsluft unterstützt wird, wobei das Einspritzventil eine vorgegebene Kraftstoffmenge an die Brennkraftmaschine abgeben kann, welches Verfahren dadurch gekennzeichnet ist, daß es folgenden Schritt umfaßt:

- es wird nachträglich verifiziert während einer stabilen Verzögerungsphase, daß eine vorgegebene Luftmenge während der Hilfsluftphase eingeblasen werden kann.

2. Verfahren nach Anspruch 1, dadurch gekennzeichnet, daß es ferner folgenden Schritt umfaßt:

- es wird verifiziert, daß die Brennkraftmaschine während der Hilfsluftphase mit einem mageren Luftkraftstoffgemisch versorgt wird.

3. Verfahren nach Anspruch 1 oder 2, dadurch gekennzeichnet, daß es folgende Schritte umfaßt:

- es wird sichergestellt, daß die Brennkraftmaschine während einer vorgegebenen Zeitspanne einer Verzögerungsdrehzahl folgt und daß die Brennkraftmaschine eine Temperatur (T) hat, die größer ist als die sogenannte Startendtemperatur,
- das Hilfsluftventil (19) wird geöffnet,
- die durch ein Verzögerungsventil (24) strömende Luftmenge ($Q_m$) wird während einer vorgegebenen Zeitspanne gemessen,
- diese Luftmenge ($Q_m$) wird mit einer Grenzluftmenge ($Q_l$) verglichen und
- hieraus wird abgeleitet, ob das Hilfsluftsystem funktioniert oder nicht.

4. Verfahren nach Anspruch 3, dadurch gekennzeichnet, daß in dem Fall, daß die gemessene Luftmenge ($Q_m$) kleiner ist als die Grenzluftmenge ($Q_l$), ein Pannencode des Hilfsluftsystems (18, 19) an ein Steuergerät (20) des Motors abgegeben wird.

5. Verfahren nach einem der Ansprüche 1 bis 4, dadurch gekennzeichnet, daß die Messung der durch das Verzögerungsregelventil (24) strömenden Luftmenge ($Q_m$) durch die Berücksichtigung eines Integraltermes bestimmt wird, der in der Berechnung eines Öffnungstaktverhältnisses (RCO) des Verzögerungsregelventils (24) erscheint.

6. Verfahren nach Anspruch 2, dadurch gekennzeichnet, daß die Verifizierung der Tatsache, daß die Brennkraftmaschine mit einem mageren Gemisch versorgt wird, während der Hilfsluftphase des Einspritzventils erfolgt.

7. Verfahren nach Anspruch 6, dadurch gekennzeichnet, daß während der Hilfsluftphase und ab dem Zeitpunkt, zu dem eine Sonde (31) zum Messen des Sauerstoffgehaltes in Betrieb ist, folgende Schritte durchgeführt werden:

- es wird festgestellt, ob die Luftzahl des eingespritzten Gemisches kleiner oder größer 1 ist,
- es wird die Anzahl der Messungen, bei denen die Luftzahl kleiner als 1 ist, und die Anzahl der Messungen, bei denen die Luftzahl größer als 1 ist, bestimmt, indem ein Sampling der Messungen während der Hilfsluftphase durchgeführt wird,
- es wird das Verhältnis aus der Anzahl der Messungen, bei denen die Luftzahl kleiner als 1 ist, und der Anzahl der während der Hilfsluftphase insgesamt durchgeführten Messungen gebildet, und
- wenn dieses Verhältnis größer als ein Mindestverhältnis ist, wird hieraus geschlossen, daß die Brennkraftmaschine während der Hilfsluftphase mit einem mageren Gemisch versorgt wurde.

8. Verfahren nach Anspruch 7, dadurch gekennzeichnet, daß ein Pannencode des Hilfsluftsystems an das Steuergerät abgegeben wird, wenn das Verhältnis kleiner als das Mindestverhältnis ist.

9. Vorrichtung zum Durchführen des Verfahrens nach einem der Ansprüche 1 bis 8, dadurch gekennzeichnet, daß sie aufweist:

- Mittel (20) zum Verifizieren, daß eine vorgegebene Luftmenge während der Hilfsluftphase eingespritzt werden kann, wobei diese Mittel aufweisen:

  - Mittel zum Öffnen eines Hilfsluftventils (19),
  - Mittel zum Sicherstellen, daß die Brennkraftmaschine (11) während einer vorgegebenen Zeitspanne einer stabilen Verzögerungsdrehzahl folgt,
  - Mittel zum Messen der das Verzögerungsregelventil (24) durchströmenden Luftmenge ($Q_m$), und
  - Vergleichsmittel zum Vergleichen der gemessenen Luftmenge ($Q_m$) mit einer Grenzluftmenge ($Q_l$), und

- Mittel (31) zum Verifizieren der Luftzahl λ des Luftkraftstoffgemisches während der Hilfsluftphase.

**Claims**

1. Method for controlling the correct operation of an injector (17) assisted with air during the start-up phase of an internal combustion engine (11), the said injector being adapted to deliver to the engine a determined quantity of fuel, the said method being characterized in that it consists in:

   - checking empirically, during a steady-state idling phase, that a determined quantity of air can be injected during the air-assistance phase.

2. Control method according to Claim 1, characterized in that it further consists in:

   - checking that the internal combustion engine is being supplied with a so-called lean air/fuel mixture during the air-assistance phase.

3. Method according to Claim 1 or 2, characterized in that it consists in:

   - ensuring that the engine has been at idling speed for a determined length of time and that the said engine is at a temperature (T) higher than a so-called start-up temperature,
   - opening the air-assistance valve (19),
   - measuring the quantity of air (Qm) passing through an idling valve (24) for a predetermined length of time,
   - comparing this quantity of air (Qm) with a limiting quantity of air (Ql) and,
   - deducing from this whether or not the air-assistance system is working.

4. Method according to Claim 3, characterized in that if the measured quantity of air Qm is smaller than the limiting quantity of air Ql, the engine management computer (20) is sent a code signifying a breakdown of the air-assistance system (18, 19).

5. Method according to one of Claims 1 to 4, characterized in that the measurement of the quantity of air (Qm) passing through the idle regulating valve (24) is determined by taking into account an integral term that appears in the calculation of an open cyclic ratio (RCO) for the idle regulating valve (24).

6. Method according to Claim 2, characterized in that the check that the engine is being fed with a lean mixture is carried out during the phase in which the injector is air-assisted.

7. Method according to Claim 6, characterized in that during the air-assistance phase and as soon as a probe (31) for measuring the quantity of oxygen is operational:

- it is determined whether the richness of the injected mixture is below or above 1,
- the number of times the richness has been lower than 1 and the number of times this richness has been higher than 1 are determined, by carrying out a sampling of measurements during the air-assistance phase,
- a ratio that corresponds to the number of times the richness has been below 1, divided by the number of measurements taken during the air-assistance phase is formed, and
- if this ratio is higher than a minimum ratio, it is deduced from this that the engine has been fed with lean mixture during the air-assistance phase.

8. Method according to Claim 7, characterized in that when the ratio is below the minimum ratio, a code signifying a breakdown of the air-assistance signal is sent to the computer.

9. Control device employing the method according to Claims 1 to 8, characterized in that it has:

- means (20) for checking that a determined quantity of air can be injected during the air-assistance phase, the said means comprising:

  - means of opening an air-assistance valve (19),
  - means adapted to ensure that the engine (11) has been at a stable idling speed for a predetermined length of time,
  - means for measuring the quantity of air (Qm) passing through the idle regulating valve (24) and
  - comparison means adapted to compare the measured quantity of air Qm with a limiting quantity of air Ql and,

- means (31) of checking the richness $\lambda$ of the air/fuel mixture during the air-assistance phase.

Figure 1

Figure 2

Figure 3

Efficacité
catalyseur

100%

50%

300°        350°        T (°C)